# EUROPÄISCHE PATENTSCHRIFT

(11) **EP 2 061 621 B1**
(45) Veröffentlichungstag und Bekanntmachung des Hinweises auf die Patenterteilung: **26.10.2011**
(21) Anmeldenummer: 07801929.6
(22) Anmeldetag: 28.08.2007
(51) Int. Cl.: B23K 9/095, B23K 26/03, G01N 21/88

(54) **VERFAHREN UND VORRICHTUNG ZUR OPTISCHEN BEURTEILUNG DER SCHWEISSQUALITÄT BEIM SCHWEISSEN**
METHOD AND DEVICE FOR THE OPTICAL ASSESSMENT OF WELDING QUALITY DURING WELDING
PROCÉDÉ ET DISPOSITIF D'ÉVALUATION OPTIQUE DE LA QUALITÉ D'UNE SOUDURE LORS DU SOUDAGE

(30) Priorität: 06.09.2006 CH 14312006
(43) Veröffentlichungstag der Anmeldung: 27.05.2009
(73) Patentinhaber: Precitec Vision GmbH & Co. KG, 65760 Eschborn (DE)
(72) Erfinder: SCHWARZ, Joachim, CH-8451 Kleinandelfingen (CH)
(74) Vertreter: Wagner, Bernhard Peter
(86) Internationale Anmeldenummer: PCT/EP2007/007506
(87) Internationale Veröffentlichungsnummer: WO 2008/028580

(56) Entgegenhaltungen:
- WO-A-01/26859
- WO-A-03/041902
- WO-A1-2007/053973
- DE-A1- 19 852 302
- JP-A- 2005 111 538

## Beschreibung

### Hintergrund

Die Erfindung betrifft ein Verfahren zur optischen Beurteilung der Schweissqualität gemäß dem Oberbegriff des Anspruchs 11, insbesondere beim Laserschweissen, bei dem ein Bild der Schweisszone aufgenommen wird. Ferner betrifft die Erfindung eine Vorrichtung gemäß dem Oberbegriff des Anspruchs 18 zur Durchführung des Verfahrens.

### Stand der Technik

Es ist bekannt, Schweissnähte optisch zu prüfen. Dazu wird insbesondere mit 2D Laser Scannern eine Laserlichtlinie (Lasertriangulationslinie) quer über die Naht gelegt und es werden daraus Geometriedaten der Naht ermittelt. Aus JP 2005111538 ist es weiter bekannt, das Bild der Metallschmelze beim Laserschweissen aufzunehmen und es mit Referenzdaten zu vergleichen.

### Darstellung der Erfindung

Der Erfindung liegt die Aufgabe zu Grunde die optische Qualitätsprüfung von Schweissnähten zu verbessern.

Dies wird bei dem eingangs genannten Verfahren durch ein Verfahren gemäß dem Anspruch 1 erreicht. Dokument DE 198 52 302 A offenbart ein solches Verfahren und eine solche Vorrichtung.

Durch die drei verschiedenen Bildelemente auf dem Bild mit den beiden Bildbereichen lässt sich die Qualitätsbeurteilung der Schweissung optimal während des Schweissprozesses durchführen.

Bei der Erfindung werden die verschiedenen Bildelemente auf einem einzigen Sensor aufgenommen, der mehrere Bildbereiche aufweist, auf welche aufgenommen werden kann (Multiple Regions of Interest, MROI). Es muss dann nur dieser eine Sensor ausgelesen werden, um alle Bildbereiche mit den drei Bildelementen des Bildes auswerten zu können. Bei der Aufnahme wird bevorzugt ein erster Bildbereich mit dem Prozessleuchten mit einer Belichtungszeit von 5 µsec oder kleiner aufgenommen. Der erste Bildbereich, auf dem als Bildelement das Prozessleuchten aufgenommen wird, wird bevorzugt mit logarithmischer Kennlinie des Sensors ausgestaltet. ,

Weiter wird vorzugsweise ein zweiter Bildbereich vorgesehen auf dem das Bildelement der Lasertriangulationslinie und das Bildelement des Grau- oder Farbbildes der Naht zusammen aufgenommen sind. Dabei wird z.B. der zweite Bildbereich mit einer Belichtungszeit von ca. 10 µsec und mit einer Beleuchtungsdauer durch eine Blitzlichtquelle von kleiner als 10 µsec beleuchtet. Bevorzugt ist es weiter, dass die Aufnahmeparameter für die Aufnahme des ersten und des zweiten Bildbereichs zwischen den Aufnahmen verändert werden. Bei einer bevorzugten Ausführungsform ist eine Planoptik mit verschiedenen Transparenzbereichen für den ersten und den zweiten Sensorbereich bzw. Bildbereich vorgesehen, insbesondere direkt über dem Sensorchip.

Bevorzugt ist weiter, dass die Aufnahme durch die Laseroptik des Schweisslasers hindurch erfolgt, was eine besonders kompakte Anordnung ergibt. Im Fall von Lichtbogenschweissung, bzw. MIG/MAG Schweissung, wird eine neben dem Brenner angeordnete Optik verwendet.

Der Erfindung liegt weiter die Aufgabe zu Grunde, eine Vorrichtung zur Durchführung des Verfahrens zu schaffen. Diese ist gemäss dem entsprechenden Vorrichtungsanspruch ausgebildet.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 eine schematische Darstellung eines Schweisskopfes mit daran angeordneter Kamera;
Figur 2 ein gemäss der Erfindung aufgenommenes Bild einer fehlerfreien Schweissung bzw. Schweissnaht; und
Figur 3 ein gemäss der Erfindung aufgenommenes Bild mit Schweissfehler hervorgerufen durch einen Schweissdrahtfehler.

### Wege zur Ausführung der Erfindung

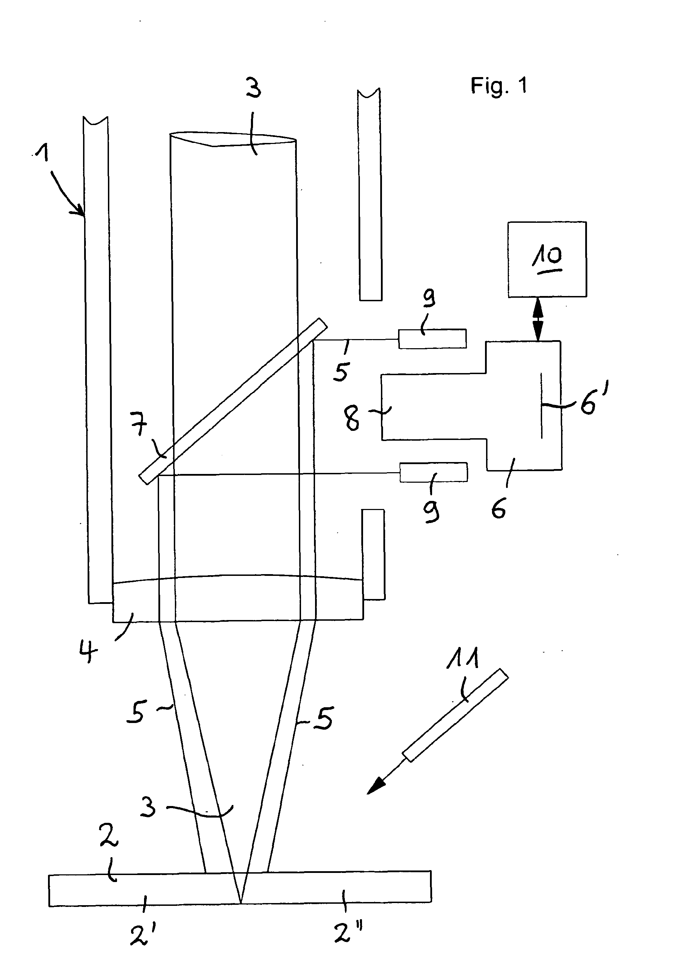

Figur 1 zeigt in einer stark schematisierten Ansicht einen Schweisskopf 1, welcher über dem Schweissgut 2 angeordnet ist, welches in diesem Beispiel aus zwei zu verschweissenden Blechen 2' und 2" besteht. Der Schweissbrenner wird in diesem bevorzugten Fall von einem Laserstrahl 3 gebildet, welcher durch eine Optik 4 hindurch auf das Schweissgut 2 auftrifft und dort die Schweissung ausführt. Auch andere Schweissverfahren als Laserschweissung sind gemäss der Erfindung beurteilbar, so insbesondere Schweissungen mit allen bekannten Lichtbogenverfahren. Die Schweissung erfolgt vorzugsweise als MIG/MAG-Schweissung mit entsprechender Gaszuführung, was aber in der schematischen Darstellung von Figur 1 nicht dargestellt ist. Durch eine Kamera 6 wird der Schweissbereich auf dem Schweissgut 2 betrachtet. Die Kamera ist vorzugsweise eine hoch-dynamische CMOS-Kamera und insbesondere eine Kamera, welche zur Aufnahme mehrerer Bilder auf dem Sensorchip ausgestaltet ist (was auch als MROI (Multiple Regions of Interest) bekannt ist), welche als ein Bild ausgegeben werden. Insbesondere kann eine Kamera vom Typ Photonfocus Hurricane, MV-1024 CL-80/160 der Firma Photonfocus AG, CH-8853 Lachen, Schweiz, verwendet werden, welche mit MROI ausgestattet ist und für die verschiedenen Bereiche unterschiedliche Belichtungszeiten ermöglicht. Es können aber auch zwei Kameras bzw. zwei Sensoren verwendet werden. Die Aufnahme erfolgt vorzugsweise aber durch eine Kamera und insbesondere durch eine Kamera 6, welche direkt am Schweisskopf angeordnet ist. Vorzugsweise erfolgt die Aufnahme direkt durch die Optik 4 für den Laserstrahl hindurch, wie in dem gezeigten Beispiel dargestellt. Durch einen Strahlteiler 7 für das von der Kamera 6 betrachtete sichtbare Licht gelangt das vom Schweissgut 2 ausgehende Licht über die Kameraoptik 8 auf deren CMOS-Sensor 6'. Eine Beleuchtung zur Beleuchtung des aufgenommenen Bereiches, welche vorzugsweise über den Strahlteiler 7 das Schweissgut 2 beleuchtet, ist mit 9 bezeichnet. Der entsprechende Strahlengang für die Beleuchtung ist mit 5 bezeichnet. Bei dieser Beleuchtung handelt es sich um eine Xenon-Blitzbeleuchtung oder um eine LED-Beleuchtung, insbesondere eine Beleuchtung mit oberflächenemittierenden Laserdioden (Vertical Cavity Surface Emitting Laser/VCSEL). Diese Dioden besitzen die Eigenschaft hoher optischer Leistung bei geringer Packungsdichte und geringer Strahldivergenz und können den Schweissbereich mit ausreichender Helligkeit beleuchten. Die Aufnahme des Schweissbereichs durch die Schweissoptik 4 hindurch für alle gemäss Erfindung aufzunehmende Bereiche benötigt sehr hohe Beleuchtungsstärken, da die Sensorparameter des CMOS-Sensors lichtunempfindlich eingestellt werden, um das sehr helle Prozessleuchten aufnehmen zu können und die Laseroptik keine guten Transparenzeigenschaften für sichtbares Licht hat. Die gezeigte Anordnung, bei welcher die Kamera 6 den Schweissbereich durch die Schweissoptik 4 hindurch betrachtet, ist indes die bevorzugte Anordnung, wenn auch andere Anordnungen, bei welchen die Kamera den Schweissbereich nicht durch die Laseroptik 4 hindurch betrachtet, ebenfalls möglich sind. Mittels einer bekannten Anordung 11 mit einem weiteren Laser wird mindestens eine Triangulationslinie über die erstarrte Schweissnaht projiziert, wie dies in den nachfolgenden Figuren ersichtlich ist. Eine Steuerung und/oder Auswerteschaltung 10, die in der Regel von einem Rechner gebildet wird, empfängt die aus der Kamera ausgelesenen Bilddaten zu deren Auswertung. Bei einer Lichtbogenschweissung (MIG/MAG-Schweissung) erfolgt die Aufnahme mit einer Kamera mit einer nahe am Schweissbrenner angeordneten Optik, was hier nicht weiter erläutert wird.

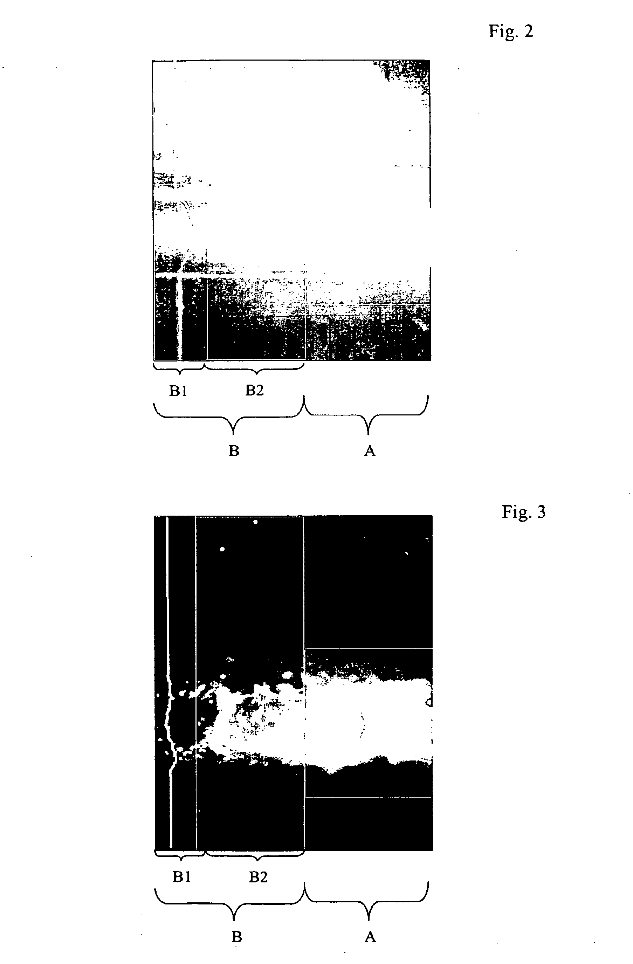

Figur 2 zeigt ein Beispiel eines aufgenommenen Bildes des Schweissbereichs, wobei es sich dabei um eine fehlerlose Schweissung bzw. Schweissnaht handelt. Die Figur 2 zeigt dabei eine Aufnahme mit grossem Objektfeld der Kamera, so dass das Prozessleuchten und die nach dem Prozess schon erstarrte Naht auf dem selben Sensor als Bild aufgenommen, als ein Bild ausgelesen und nachfolgend geprüft werden können. Unter Prozessleuchten oder Prozesslichtauswertung wird dabei die Aufnahme und die Auswertung des Schweissbereichs mit noch flüssigem, im sichtbaren Bereich leuchtenden Schweissmaterial verstanden. Gemäss der Erfindung werden drei unterschiedliche Bildelemente aufgenommen. Die Erkennung lokaler Fehlstellen der Naht geschieht dabei mit der an sich bekannten Lasertriangulation, wozu die entsprechend über die Naht projizierte Triangulationslinie aufgenommen wird und mit einer Graubildanalyse oder allenfalls einer Farbbildanalyse wozu das Bild der Naht aufgenommen wird. Zusätzlich wird das Prozessleuchten aufgenommen. Es kann dazu so vorgegangen werden, dass der Sensor 6' der Kamera in zwei Hauptbereiche A und B aufgeteilt ist. Diese können insbesondere zwei separat belichtbare Bereiche auf dem selben Kamerasensor 6' sein. Im Hauptbereich A gemäss Figur 2 zur Visualisierung des Prozessleuchtens wird der Sensorbereich mit logarithmischer Kennlinie und mit Belichtungszeiten von vorzugsweise kleiner als 5 µs betrieben. Im Hauptbereich B wird mit linearer oder logarithmischer Kennlinie und mit Belichtungszeiten im Bereich von 10 µs gearbeitet, um im Bereich B1 als Bildelement die Triangulationslinie und im Bereich B2 als weiteres Bildelement das Bild der Naht aufzunehmen. Die Belichtungszeit ist dabei so gewählt, dass die Triangulationslinie im Bereich B1 zur Auswertung noch genügend hell dargestellt ist, eine Überstrahlung durch das Prozessleuchten aber verhindert wird. In dieser Belichtungszeit wird mit einer Blitzlichtquelle oder mit den erwähnten VCSEL-Lichtquellen ein Lichtpuls mit einer Dauer von <10 µs beleuchtet. Die in der optischen Nahtinspektionseinrichtung SOUVIS 5000 der Firma Soudronic AG, Bergdietikon, Schweiz verwendete Xenon-Blitzlichtquelle kann mit einer Pulsdauer von 5 µs bis 10 µs betrieben und dafür eingesetzt werden und beleuchtet die Schweissnaht genügend hell. Die kurze Blitzdauer verhindert dabei Bewegungsunschärfe. Bevorzugterweise werden die Kameraparameter für die Aufnahme beider Bereiche umgeschaltet, um die Aufnahmesituation je nach Bereich zu optimieren. Es kann dafür das Soudronic Fast Track Kamera Modul der Firma Soudronic AG, Bergdietikon, Schweiz, eingesetzt werden, welches das schnelle Umschalten der Kameraparameter erlaubt und ebenso das schnelle Auslesen der beiden Bereiche des CMOS-Sensors 6' und welches Modul mit der vorgenannten Hurricane Kamera der Firma Photonfocus zusammenarbeitet. Eine entsprechende Steuerung für die Kamera ist in Figur 1 mit 10 angedeutet. Bevorzugt kann ferner für die Aufnahme der Bereiche A und B der Sensor mit einer Planoptik direkt auf dem Sensorchip oder beabstandet von diesem in zwei unterschiedlich empfindliche Bereiche entsprechend den Bereichen A und B der Figuren 2 und 3 unterteilt werden. Die Planoptik kann aus einem Deckglas mit zwei Bereichen unterschiedlicher Transparenz bestehen. Die Transparenz kann dabei 100 % für den Bereich B zur Geometrie- und Graubildauswertung betragen und kleiner als 50 % zur Prozesslichtauswertung bzw. den Bereich A.

Figur 3 zeigt eine Aufnahme, die auf die erwähnte Weise und gleich wie diejenige von Figur 2 ausgeführt worden ist, wobei aber hier bei der Schweissung ein Schweissfehler, hervorgerufen durch einen Fehler des Schweissdrahtes, aufgetreten ist. Es ist ersichtlich; dass einerseits im Bereich B1 des Hauptbereiches B die Triangulation den Nahtfehler im erstarrten Bereich kenntlich macht. Andererseits ist auch in der Graubildaufnahme im Bereich B2 des Hauptbereiches B eine entsprechende Rauhigkeit der Schweissnaht zu erkennen. Es ist daher ohne weiteres möglich, durch eine Auswertung, die ebenfalls in der Steuerung 10 stattfinden kann oder in einem separaten Rechner, den Schweissnahtfehler festzustellen. Weiter ist im Bereich A, in welchem das Prozessleuchten aufgenommen worden ist, ebenfalls deutlich eine Abweichung vom Normalbild, wie es sich in Figur 2 dargestellt hat, zu erkennen. Auch dies kann durch eine Bildauswertung ohne weiteres festgestellt und zur Qualitätskontrolle des Schweissvorganges verwendet werden. Beim Prozessleuchten sieht die Kamera jeweils eine typische Lichtverteilung im sichtbaren Bereich, wie dies in Figur 2 gut erkennbar ist, welche beim Vorliegen einer fehlerhaften Schweissung gestört wird, wie dies in Figur 3 ersichtlich ist. Durch die Aufnahme der Laserlinie und des Graubildes im Bereich B können weiter auf bekannte Weise die Nahtbreite und die Nahtposition vermessen werden und die geometrischen Daten wie Konvexität, Konkavität und gegebenenfalls ein Kantenversatz können vermessen werden. Weiter kann auf bekannte Weise das Nahtvolumen vermessen werden. Die Messung der geometrischen Daten erfolgt dabei über die Lasertriangulation, das Erkennen lokaler und globaler Fehlstellen über die Graubildanalyse und die Lasertriangulation.

Die Auswertung des Prozessleuchtens auf Intensität und geometrische Merkmale zusammen mit der geometrischen Vermessung mit der Schweissnaht und der Graubildanalyse ergibt dabei eine zuverlässige Aussage über die Qualität der Schweissnaht. Das schnelle Umschalten der Sensorbereiche A und B ermöglicht optimale Sensorkennlinien bzw. Kameraparameter für die unterschiedlichen Aufgabenstellungen der beiden Aufnahmen auf die beiden Sensorbereiche. Alle Aufnahmen werden bevorzugt mit nur einem Sensor ausgeführt, was den apparativen Aufwand, den Bedienungsaufwand und Wartungsaufwand erheblich senkt.

Mit der Anordnung des Sensors bzw. der Kamera direkt am Schweissbrenner wird wesentlich weniger Aufwand benötigt als für ein separates Handling in einer separaten Schweissprüfung. Die vorliegende Erfindung kann bei der Qualitätsüberwachung von Schweissnähten, insbesondere MIG/MAG-Schweissnähten aller Art verwendet werden. Ferner für die Geometrieüberwachung von Oberflächen bei gleichzeitiger Inspektion der Oberflächenbeschaffenheit und der Überwachung des Schweissprozesses.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfanges der folgenden Ansprüche ausgeführt werden kann.

## Patentansprüche

1. Verfahren zur optischen Beurteilung der Schweißqualität während des Schweißens, insbesondere beim Laserschweißen oder beim Lichtbogenschweißen, bei dem die Schweißzone durch einen optischen Sensor betrachtet und eine Lasertriangulationslinie über den bereits erstarrten Teil der Schweißnaht gelegt wird, wobei einerseits das Prozessleuchten des noch flüssigen, im sichtbaren Bereich leuchtenden Schweißmaterials sowie andererseits ein Grau- oder Farbbild der erstarrten Schweißnaht und die Lasertriangulationslinie in verschiedenen Bildbereichen (A, B) aufgenommen werden, wobei die verschiedenen Bildbereiche (A, B) auf einem einzigen Sensor (6') aufgenommen und als ein Bild ausgelesen werden, wobei die Aufnahme eines ersten Bildbereiches (A) mit dem Prozessleuchten getrennt von der Aufnahme eines zweiten Bildbereiches (B) mit der Triangulationslinie und dem Grau- oder Farbbild erfolgt, **dadurch gekennzeichnet, dass** die verschiedenen Bildbereiche (A, B) mit unterschiedlichen Belichtungszeiten ausgelesen werden.

2. Verfahren nach Anspruch 1, **dadurch gekennzeichnet, dass** die Aufnahme auf den ersten Bildbereich (A) für das Prozessleuchten mit einer Belichtungszeit von 5 µsec oder kleiner erfolgt.

3. Verfahren nach Anspruch 1 oder 2, **dadurch gekennzeichnet, dass** die Aufnahme auf den ersten Bildbereich (A) für das Prozessleuchten mit logarithmischer Kennlinie des Sensors erfolgt.

4. Verfahren nach einem der Ansprüche 1 bis 3, **dadurch gekennzeichnet, dass** der zweite Bildbereich (B) einen Unterbereich (B1), enthaltend die Lasertriangulationslinte, und einen Unterbereich (B2), enthaltend das Grau- oder Farbbild, umfasst, welche zusammen aufgenommen werden, wobei insbesondere der zweite Bildbereich (B) mit einer Belichtungszeit von ca. 10 µsec aufgenommen und dabei mit einer Beleuchtungsdauer durch eine Blitzlichtquelle von kleiner als 10 µsec beleuchtet wird.

5. Verfahren nach einem der Ansprüche 1 bis 4, **dadurch gekennzeichnet, dass** die Aufnahmeparameter für die Aufnahme der verschiedenen Bildbereiche (A und B) zwischen den Aufnahmen verändert werden.

6. Verfahren nach einem der Ansprüche 1 bis 5, **dadurch gekennzeichnet, dass** die Aufnahme durch die Optik (4) eines Schweißlasers hindurch erfolgt.

7. Verfahren nach einem der Ansprüche 1 bis 6, **dadurch gekennzeichnet, dass** über dem Sensor, und bevorzugt direkt auf dem Sensorchip, eine Planoptik mit verschiedener Transparenz für die Bereiche (A und B) vorgesehen ist.

8. Vorrichtung zur Durchführung des Verfahrens nach einem der Ansprüche 1 bis 7, **gekennzeichnet durch** eine Schweißvorrichtung, insbesondere mit einer Laserstrahlquelle, einer Einrichtung (11) zur Erzeugung mindestens einer Lichttriangulationslinie und eine an der Schweißeinrichtung angeordnete Kamera (6), welche auf den Schweißbereich gerichtet ist und zur Aufnahme des Prozessleuchtens und des nachfolgenden erstarrten Schweißnahtbereiches angeordnet und ausgestaltet ist, wobei die verschiedenen Bildbereiche auf einem einzigen Sensor (6') aufgenommen und als ein Bild ausgelesen werden, wobei die Aufnahme eines ersten Bildbereiches (A) mit dem Prozessleuchten getrennt von der Aufnahme eines zweiten Bildbereiches (B) mit der Triangulationslinie und dem Grau- oder Farbbild erfolgt, **dadurch** gekennzeichnet, dass die Kamera für die verschiedenen Bildbereiche (A, B) unterschiedliche Belichtungszeiten ermöglicht.

9. Vorrichtung nach Anspruch 8, **dadurch gekennzeichnet, dass** die Kamera über einen Strahlteiler (7) durch die Schweißoptik (4) auf den Schweißbereich blickt.

10. Vorrichtung nach Anspruch 8 oder 9, **dadurch gekennzeichnet, dass** eine Blitzlichtbeleuchtung mit oberflächenemittierenden Laserdioden vorgesehen ist.

11. Vorrichtung nach einem der Ansprüche 9 bis 10, **dadurch gekennzeichnet, dass** ein Graufilter über dem Sensor (6') und insbesondere direkt auf dem Sensor angeordnet ist, welches verschiedene Transparenzbereiche für die verschiedenen Sensorbereiche (A, B) aufweist, insbesondere eine Transparenz von 100% für den Bereich (B), in dem die Triangulationslinie und das Grau- oder Farbbild aufnehmbar sind, und eine Transparenz von kleiner als 50% für den Bereich (A), in dem das Prozessleuchten aufnehmbar ist.

12. Vorrichtung nach einem der Ansprüche 9 bis 11, **dadurch gekennzeichnet, dass** die Aufnahme auf den ersten Bildbereich (A) für das Prozessleuchten mit einer Belichtungszeit von 5 µsec oder kleiner erfolgt.

13. Vorrichtung nach einem der Ansprüche 9 bis 12, **dadurch gekennzeichnet, dass** die Aufnahme auf den ersten Bildbereich (A) für das Prozessleuchten mit logarithmischer Kennlinie des Sensors erfolgt.

14. Vorrichtung nach einem der Ansprüche 9 bis 13, **dadurch gekennzeichnet, dass** der zweite Bildbereich (B) einen Unterbereich (B1), enthaltend die Lasertriangulationslinie, und einen Unterbereich (B2), enthaltend das Grau- oder Farbbild, umfasst, welche zusammen aufgenommen werden.

15. Vorrichtung nach einem der Ansprüche 9 bis 14, **dadurch gekennzeichnet, dass** der zweite Bildbereich (B) mit einer Belichtungszeit von ca. 10 µsec aufgenommen und dabei mit einer Beleuchtungsdauer durch eine Blitzlichtquelle von kleiner als 10 µsec beleuchtet wird.

16. Vorrichtung nach einem der Ansprüche 9 bis 15, **dadurch gekennzeichnet, dass** die Aufnahmeparameter für die Aufnahme der verschiedenen Bildbereiche (A und B) zwischen den Aufnahmen verändert werden.

## Claims

1. A method for optical assessment of welding quality during welding, in particular during laser welding or during arc welding, in the case of which the welding zone is observed by an optical sensor, and a laser triangulation line is laid over the already solidified part of the weld, wherein on the one hand the process illumination of the still liquid welding material shining in the visible region, and on the other hand a gray or color image of the solidified weld and the laser triangulation line are recorded in various image regions (A, B), wherein the various image regions (A, B) are recorded on a single sensor (6') and read out as an image, wherein the recording of a first image region (A) with the process illumination is performed separately from the recording of a second image region (B) with the triangulation line and the gray or color image,
**characterized in that**
the various image regions (A, B) are read out with different exposure times.

2. The method as claimed in claim 1, **characterized in that** the recording onto the first image region (A) of the process illumination is performed with an exposure time of 5 µsec or less.

3. The method as claimed in one of claims 1 or 2, **characterized in that** the recording onto the first image region (A) for the process illumination is performed with a logarithmic characteristic of the sensor.

4. The method as claimed in one of claims 1 to 3, **characterized in that** the second image region (B) comprises a subregion (B1) containing the laser triangulation line, and a subregion (B2) containing the gray or color image, which are recorded together, wherein in particular the second image region (B) is recorded with an exposure time of approximately 10 µsec and in the process is illuminated with an illumination period by a flashlight source of less than 10 µsec.

5. The method as claimed in one of claims 1 to 4, **characterized in that** the recording parameters for recording of the various image regions (A and B) are altered between the recordings.

6. The method as claimed in one of claims 1 to 5, **characterized in that** the recording is performed through the optic (4) of a welding laser.

7. The method as claimed in one of claims 1 to 6, **characterized in that** a planar optics of different transparency for the areas (A and B) is provided above the sensor, and preferably directly on the sensor chip.

8. An apparatus for carrying out the method as claimed in one of claims 1 to 7, **characterized by** a welding fixture, in particular having a laser beam source, a device (11) for generating at least one light triangulation line, and a camera (6) that is arranged on the welding device and directed towards the welding area, and is arranged and configured to record the process illumination and the subsequent solidified weld region, wherein the various image regions are recorded on a single sensor (6') and read out as an image, wherein the recording of a first image region (A) with the process illumination is performed separately from the recording of a second image region (B) with the triangulation line and the gray or color image,
**characterized in that**
the camera enables different exposure times for the various image regions (A, B).

9. The apparatus as claimed in claim 8, **characterized in that** the camera views the welding area through the welding optics (4) via a beam splitter (7).

10. The apparatus as claimed in claim 8 or 9, **characterized in that** a flashlight illumination with surface emitting laser diodes is provided.

11. The apparatus as claimed in one of claims 9 to 10, **characterized in that** arranged above the sensor (6') and, in particular, directly on the sensor is a gray filter that has various transparency ranges for the various sensor regions (A, B), in particular a transparency of 100% for the area (B) in which the triangulation line and the gray or color image can be recorded, and a transparency of less than 50% for the area (A) in which the process illumination can be recorded.

12. The apparatus as claimed in one of claims 9 to 11, **characterized in that** the recording onto the first image region (A) for the process illumination is performed with an exposure time of 5 µsec or less.

13. The apparatus as claimed in one of claims 9 to 12, **characterized in that** the recording onto the first image region (A) for the process illumination is performed with a logarithmic characteristic of the sensor.

14. The apparatus as claimed in one of claims 9 to 13, **characterized in that** the second image region (B) comprises a subregion (B1) containing the laser triangulation line, and a subregion (B2) containing the gray or color image, which are recorded together.

15. The apparatus as claimed in one of claims 9 to 14, **characterized in that** the second image region (B) is recorded with an exposure time of approximately 10 µses and in the process is illuminated with an illumination period by a flashlight source of less than 10 µsec.

16. The apparatus as claimed in one of claims 9 to 15, **characterized in that** the recording parameters for recording of the various image regions (A and B) are altered between the recordings.

## Revendications

1. Procédé pour l'appréciation optique de la qualité d'une soudure pendant le soudage, en particulier lors du soudage au laser ou du soudage à l'arc électrique, dans lequel la zone de soudage est observée par un capteur optique et une ligne de triangulation laser est posée sur la partie déjà figée du cordon de soudure, dans lequel on enregistre d'une part la lumière émanant du soudage du matériau de soudage encore liquide produisant une lumière dans la plage visible, de même que l'on enregistre d'autre part une image grise ou une image en couleurs du cordon de soudure figé et de la ligne de triangulation laser dans différentes zones d'images (A, B), dans lequel les différentes zones d'images (A, B) sont enregistrées sur un capteur unique (6') et sont lues comme représentant une image, l'enregistrement d'une première zone d'image (A) avec la lumière émanant du soudage a lieu séparément de l'enregistrement d'une seconde zone d'image (B) avec la ligne de triangulation et l'image grise ou en couleurs,
**caractérisé en ce que** les différentes zones d'images (A, B) sont lues avec des temps d'exposition différents.

2. Procédé selon la revendication 1, **caractérisé en ce que** l'enregistrement sur la première zone d'image (A) pour la lumière émanant du soudage a lieu avec un temps d'exposition de 5 µs ou moins.

3. Procédé selon la revendication 1 ou 2, **caractérisé en ce que** l'enregistrement sur la première zone d'images (A) pour la lumière émanant du soudage a lieu avec un capteur présentant une courbe caractéristique logarithmique.

4. Procédé selon l'une des revendications 1 à 3, **caractérisé en ce que** la seconde zone d'image (B) comprend une zone partielle (B1), contenant la ligne de triangulation laser, et une zone partielle (B2), contenant l'image grise ou l'image en couleurs, qui sont enregistrées ensemble, dans lequel en particulier la seconde zone d'image (B) est enregistrée avec un temps d'exposition d'environ 10 µs et est ici éclairée par une source de lumière flash avec une durée d'éclairage inférieure à 10 µs.

5. Procédé selon l'une des revendications 1 à 4, **caractérisé en ce que** les paramètres d'enregistrement pour l'enregistrement des différentes zones d'images (A et B) sont modifiés entre les enregistrements.

6. Procédé selon l'une des revendications 1 à 5, **caractérisé en ce que** l'enregistrement a lieu à travers l'optique (4) d'un laser de soudage.

7. Procédé selon l'une des revendications 1 à 6, **caractérisé en ce qu'**il est prévu au-dessus du capteur, et de préférence directement sur le composant capteur, une optique plane présentant une transparence différente pour les zones (A et B).

8. Appareil pour la mise en oeuvre du procédé selon l'une des revendications 1 à 7, **caractérisé par** un dispositif de soudage, en particulier avec une source de rayonnement laser, un système (11) pour engendrer au moins une ligne de triangulation lumineuse et une caméra (6) agencée sur le dispositif de soudage, laquelle est orientée vers la zone de soudage et est agencée et conçue pour enregistrer la lumière émanant du soudage et de la zone successive du cordon de soudure figé, dans lequel les différentes zones d'images sont enregistrées sur un capteur unique (6') et sont lues comme représentant une image, dans lequel l'enregistrement d'une première zone d'image (A) avec la lumière émanant du soudage a lieu séparément de l'enregistrement d'une seconde zone d'image (B) avec la ligne de triangulation et avec l'image grise ou en couleurs,
**caractérisé en ce que** la caméra permet des temps d'exposition différents pour les différentes zones d'images (A, B).

9. Appareil selon la revendication 8, **caractérisé en ce que** la caméra est dirigée vers la zone de soudage via un subdiviseur de rayonnement (7) à travers l'optique de soudage (4).

10. Appareil selon la revendication 8 ou 9, **caractérisé en ce qu'**il est prévu un éclairage à lumière flash avec des diodes laser à émission de surface.

11. Appareil selon l'une des revendications 9 à 10, **caractérisé en ce qu'**un filtre gris est agencé au-dessus du capteur (6') et en particulier directement sur le capteur, lequel présente des zones de transparence différente pour les zones différentes (A, B) du capteur, en particulier une transparence de 100 % pour la zone (B), dans laquelle il est possible d'enregistrer la ligne de triangulation et l'image grise ou en couleurs, et une transparence inférieure à 50 % pour la zone (A) dans laquelle il est possible d'enregistrer la lumière émanant du soudage.

12. Appareil selon l'une des revendications 9 à 11, **caractérisé en ce que** l'enregistrement sur la première zone d'image (A) pour la lumière émanant du soudage a lieu avec un temps d'exposition de 5 µs ou moins.

13. Appareil selon l'une des revendications 9 à 12, **caractérisé en ce que** l'enregistrement sur la première zone d'image (A) pour la lumière émanant du soudage a lieu avec un capteur présentant une courbe caractéristique logarithmique.

14. Appareil selon l'une des revendications 9 à 13, **caractérisé en ce que** la seconde zone d'image (B) comprend une zone partielle (B1), contenant la ligne de triangulation laser, et une zone partielle (B2), contenant l'image grise ou en couleurs, lesquelles sont enregistrées ensemble.

15. Appareil selon l'une des revendications 9 à 14, **caractérisé en ce que** la seconde zone d'image (B) est enregistrée avec un temps d'exposition d'environ 10 µs, et est ici éclairée au moyen d'une source de lumière flash avec une durée d'éclairage inférieure à 10 µs.

16. Appareil selon l'une des revendications 9 à 15, **caractérisé en ce que** les paramètres d'enregistrement pour l'enregistrement des différentes zones d'images (A et B) sont modifiés entre les enregistrements.
